# FASCICULE DE BREVET EUROPEEN

(11) **EP 0 767 206 B1**
(45) Date de publication et mention de la délivrance du brevet: **10.07.2002**
(21) Numéro de dépôt: 96105415.2
(22) Date de dépôt: 04.04.1996
(51) Int. Cl.: C08K 5/54, C08C 19/44, C08L 21/00, B60C 1/00

(54) **Composition de caoutchouc à base d'un polymère diénique comprenant un dérivé organosilane, utilisable pour la fabrication de bandes de roulement de pneumatiques**
Kautschukmischung basierend auf einem Dienpolymer mit von Organosilanen abgeleiteten Gruppen zur Verwendung in Reifenlaufflächen
Rubber composition based on a diene polymer containing moieties from organosilane compounds for use in tire treads

(30) Priorité: 04.10.1995 FR 9511762
(43) Date de publication de la demande: 09.04.1997
(73) Titulaire: COMPAGNIE GENERALE DES ETABLISSEMENTS MICHELIN-MICHELIN & CIE, 63040 Clermont-Ferrand Cédex (FR)
(72) Inventeur: Labauze, Gérard, 63100 Clermont-Ferrand (FR)
(74) Mandataire: Hiebel, Robert

(56) Documents cités:
- EP-A- 0 002 864
- EP-A- 0 447 066
- EP-A- 0 692 493
- US-A- 4 400 485

## Description

La présente invention est relative à une composition de caoutchouc, vulcanisable au soufre, possédant des propriétés hystérétiques améliorées à l'état vulcanisé, comprenant un polymère diénique fonctionnalisé alcoxysilane et du noir de carbone ou du noir de carbone et de la silice à titre de charge renforçante, utilisable notamment pour la fabrication d'enveloppes de pneumatiques.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que par exemple des sous-couches, des gommes de liaison entre caoutchoucs de différentes natures ou de calandrage de renforts métalliques ou textiles, des gommes de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation. La très grande majorité de ces solutions se sont essentiellement concentrées sur l'utilisation de polymères modifiés avec du noir de carbone comme charge renforçante dans le but d'obtenir une bonne interaction entre le polymère modifié et le noir de carbone car l'usage de charges blanches renforçantes, et de silice notamment, s'étant longtemps révélé inapproprié en raison du faible niveau de certaines propriétés de telles compositions et par voie de conséquence de certaines propriétés des pneumatiques mettant en oeuvre ces compositions. A titre d'exemples illustratifs de cet art antérieur, nous pouvons citer le brevet US-B-4 550 142 qui décrit une composition de caoutchouc à base de noir de carbone et d'un polymère diénique fonctionnalisé à l'aide d'un dérivé de la benzophénone, ayant des propriétés hystérétiques améliorées. Le brevet US-B-5 159 009 qui décrit, l'utilisation de noir de carbone modifié par des dérivés alcoxysilanes polysulfurés dans des compositions à base de polymères diéniques. Le brevet US-B-4 820 751 qui décrit une composition de caoutchouc utilisable dans la fabrication de pneumatiques, comprenant un noir de carbone particulier utilisé avec un agent de couplage silane et qui peut être utilisée avec une quantité minoritaire de silice lorsque cette composition est destinée à constituer une bande de roulement. Enfin, la demande de brevet EP-A1-0 519 188 qui décrit une composition destinée à constituer une bande de roulement de pneumatique à base d'un caoutchouc diénique et d'un noir de carbone modifié par incorporation de composés organiques du silicium particuliers au mélange maître.

Quelques solutions furent proposées concernant l'utilisation de silice à titre de charge renforçante dans des compositions destinées à constituer des bandes de roulement de pneumatiques. A titre d'exemple d'un tel art antérieur, on peut citer la demande de brevet EP-A-0 299 074 qui décrit une composition de caoutchouc diénique chargée à la silice à base d'un polymère diénique fonctionnalisé à l'aide d'un silane ayant un reste alcoxyle non hydrolysable. La demande de brevet EP-A-0 447 066 qui décrit une composition chargée à la silice renfermant un polymère diénique fonctionnalisé à l'aide d'un composé silane halogéné. Malgré l'amélioration des propriétés obtenues avec l'emploi de tels polymères fonctionnalisés, les compositions de silice décrites dans cet art antérieur ne se sont pas révélées utilisables pour constituer des bandes de roulement de pneumatiques car les propriétés exhibées quoique améliorées restent néanmoins insuffisantes par rapport au niveau requis.

La présente invention a pour objet des compositions de caoutchouc diénique renfermant à titre de charge renforçante du noir de carbone ou du noir de carbone et de la silice, utilisables dans la fabrication de pneumatiques, notamment de bandes de roulement, possédant des propriétés hystérétiques améliorées.

La présente invention a également pour objet un procédé permettant de réduire notablement l'hystérèse de compositions de caoutchoucs diéniques utilisables dans la fabrication de pneumatiques, notamment de bandes de roulement, sans pénaliser les autres propriétés.

L'invention a en outre pour objet des bandes de roulement de pneumatiques et des pneumatiques possédant une résistance au roulement réduite.

La demanderesse vient de découvrir de manière surprenante qu'il est possible, sans affecter les autres propriétés, de diminuer fortement l'hystérèse de compostions de caoutchoucs diéniques utilisables dans la fabrication de pneumatiques, notamment de bandes de roulement, comprenant à titre de charge renforçante du noir de carbone ou un mélange de noir de carbone et de silice par l'utilisation d'au moins un polymère diénique fonctionnalisé ou modifié à l'aide d'un dérivé alcoxysilane, avec au moins un composé organosilane comportant une ou plusieurs fonctions amine ou imine.

L'invention concerne une composition de caoutchouc, vulcanisable au soufre, comprenant au moins un polymère diénique fonctionnalisé ou modifié et du noir de carbone ou un mélange de noir de carbone et de silice à titre de charge renforçante, caractérisée en ce que le polymère diénique fonctionnalisé ou modifié est un polymère fonctionnalisé alcoxysilane ou modifié par un dérivé alcoxysilane et en ce qu'elle comprend en outre au moins un composé organosilane comportant une ou plusieurs fonctions amine ou imine répondant à la formule générale I :

Z-R¹-Si(OR²)₃₋ₙ(R³)ₙ

dans laquelle :
Z représente une fonction amine primaire, secondaire cyclique ou non ou une fonction imine ou un reste polyaminé.
R¹ représente un reste alcoylène, arylène, alcoyarylène, aralcoylène, R² et R³, identiques ou différents, représentent un reste alcoyle, aryle, alkaryle ou aralkyle, chacun des restes R¹, R² et R³ ayant de 1 à 12 atomes de carbone et de préférence ayant de 1 à 4 atomes de carbone.
n est un nombre entier choisi parmi les valeurs 0, 1 ou 2.
Tous les polymères diéniques fonctionnalisés ou modifiés par un composé alcoxysilane conviennent mais les polymères répondant à la formule générale II sont préférés :

(Y)-R⁵-Si(OR⁴)₂-P

dans laquelle :
Y représente un halogène ou un reste alcoyle, époxy, glycidyloxy, vinylique, allylique.
R⁵ représente un reste alcoylène, arylène, alcoyarylène, ou aralcoylène, R⁴ représente un reste alcoyle, aryle, alkylaryle ou aralkyle, chacun des restes R⁴ et R⁵ ayant de 1 à 12 atomes de carbone, et P représente la chaîne d'un polymère diénique choisi dans le groupe représenté par tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinyle aromatique ayant de 8 à 20 atomes de carbone. A titre de diènes conjugués conviennent notamment le butadiène-1,3, le 2-méthyl-1,3-butadiène, les 2,3-di(alcoyle en C₁ à C₅)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, un aryl-1,3-butadiène, le 1,3-pentadiène, le 2,4-hexadiène, etc...

A titre de composés vinyle aromatique conviennent notamment le styrène, l'ortho-, meta, para-méthylstyrène, le mélange commercial "vinyle-toluène", le para-tertiobutyl-styrène, les méthoxy-styrènes, les chloro-styrènes, le vinyle mésitylène, le divinyle benzène, le vinyle naphtalène, etc... Les copolymères peuvent contenir entre 99 % et 20 % en poids d'unités diéniques et de 1 % à 80 % en poids d'unités vinyle aromatiques.

Les polymères diéniques fonctionnalisés ou modifiés par un composé alcoxysilane peuvent avoir toute microstructure qui est fonction des conditions de polymérisation utilisées. Les polymères peuvent être à blocs, statistiques, séquencés, microséquencés, etc... et être préparés en masse, en émulsion, en dispersion ou en solution. Lorsqu'il s'agit d'une polymérisation anionique, la microstructure de ces polymères peut être déterminée par la présence ou non d'un agent modifiant et/ou randomisant et des quantités d'agent modifiant et/ou randomisant employées.

A titre préférentiel conviennent les polybutadiènes et en particulier ceux ayant une teneur en unités-1,2 comprise entre 4 % et 80 % ou ceux ayant une teneur en unités cis-1,4 supérieure à 80 %, les polyisoprènes, les copolymères de butadiène-styrène et en particulier ceux ayant une teneur en styrène comprise entre 5 et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %. Dans le cas de copolymères de butadiène-styrène-isoprène conviennent ceux ayant une teneur en styrène comprise entre 5 et 50 %, en poids et plus particulièrement comprise entre 10 % et 40 %, en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 80%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 %.

Les polymères diéniques fonctionnalisés ou modifiés par un dérivé alcoxysilane sont obtenus de manière connue en soi par polymérisation ou copolymérisation du ou des monomères en présence d'un initiateur anionique ou non, mono ou polyfonctionnel pour obtenir un polymère vivant ou non, laquelle est suivie soit de la réaction de fonctionnalisation avec un composé alcoxysilane comme décrit par exemple dans le brevet US-B-0-3 244 664 ou dans la demande de brevet FR 94/08887, soit de la réaction de modification, comme par exemple décrit dans la demande de brevet FR-A1-2 340 323.

A titre d'exemples non limitatifs de composés organosilanes de formule I, on peut mentionner l'aminopropyltriméthoxysilane, l'aminopropyltriéthoxysilane, l'aminopropylméthyldiméthoxysilane, l'aminopropyldiméthylméthoxysilane, le méthylaminopropyltriméthoxysilane, le diméthylaminopropyltriméthoxysilane, le méthylaminopropyltriméthoxysilane, le méthylaminopropyltriéthoxysilane, le diméthylpropyltriéthoxysilane, le piperidinopropyltriméthoxysilane, l'imidazolinopropyltriméthoxysilane, l'aminoéthylaminopropyltriméthoxysilane, le pyrrolidinopropyltriméthoxysilane, le piperazinopropyltriméthoxysilane, le morpholinopropyltriméthoxysilane, le pirazolinopropyltriméthoxysilane, le triazolinopropyltriméthoxysilane, le benzilidène propylaminotriméthoxysilane. Ces composés organosilanes de formule I peuvent être utilisés dans des quantités variant de 0,1 à 10 parties en poids pour 100 parties de polymères fonctionnalisés.

Comme noirs de carbone susceptibles d'être mis en oeuvre dans les compositions de caoutchoucs conformes à l'invention, conviennent tous les noirs de carbone qu'ils soient ou non modifiés par oxydation ou par tout autre traitement chimique, notamment tous les noirs de carbone commercialement disponibles ou conventionnellement utilisés dans les pneus et particulièrement dans les bandes de roulement de pneumatiques. A titre d'exemples non limitatifs de tels noirs de carbone, on peut citer les noirs N234, N339, N326, N375, etc... Le noir de carbone peut représenter la totalité de la charge renforçante, mais il peut aussi être utilisé en coupage avec une charge blanche et en particulier de la silice. Toutes les silices conviennent, et il peut s'agir soit de silices conventionnelles, soit de silices précipitées hautement dispersibles, ces dernières étant toutefois préférées.

Par silice hautement dispersible, on entend toute silice ayant une aptitude à la désagglomération et à la dispersion dans une matrice polymérique très importante observable par microscopie électronique ou optique, sur coupes fines. Comme exemples non limitatifs de telles silices hautement dispersibles préférentielles on peut citer celles ayant une surface CTAB égale ou inférieure à 450 m²/g et particulièrement celles décrites dans les demandes de brevet EP-A-0 157 703 et EP-A-0-520 862, ou la silice Perkasil KS 340 de la société Akzo, la silice Zeosil 1165 MP de la Société Rhône-Poulenc, la silice Hi-Sil 2000 de la Société PPG, les silices Zeopol 8741 et Zeopol 8745 de la Société Huber. Plus préférentiellement conviennent les silices ayant une surface spécifique CTAB ≥ 100 et ≤300 m²/g et une surface spécifique BET ≥ 100 et ≤ 300 m²/g et plus préférentiellement celles ayant un rapport surface spécifique BET/surface spécifique CTAB ≥ 1.0 et ≤ 1.2, peu important leurs autres caractéristiques additionnelles comme par exemple la prise d'huile, la porosité et la distribution poreuse, le diamètre médian, l'aire projetée moyenne des agrégats, etc... et l'état physique sous lequel la silice se présente par exemple microbilles, granulés, poudre, etc...Bien entendu par silice, on entend également des coupages de différentes silices. La silice peut être utilisée seule ou en présence d'autres charges blanches. La surface spécifique CTAB est déterminée selon la méthode NFT 45007 de novembre 1987. La surface spécifique BET est déterminée selon la méthode de BRUNAUER, EMMET, TELLER décrite dans »The Journal of the American Chemical Society, Vol. 80, page 309 (1938) » correspondant à la norme NFT 45007 de novembre 1987.

Le taux de charge peut varier de 30 à 100 parties de polymère fonctionnalisé ou modifié alcoxysilane. La proportion de silice dans le coupage de charge peut varier de 1 à 200 parties en poids pour 100 parties de noir de carbone. La silice peut représenter de 1 % à 70 % en poids de la charge renforçante totale. Les compositions de caoutchoucs conformes à l'invention peuvent comprendre exclusivement un ou plusieurs polymères diéniques fonctionnalisés ou modifiés alcoxysilanes en tant qu'élastomère. Cependant le ou les polymère(s) diénique(s) fonctionnalisé(s) ou modifié(s) alcoxysilane(s) peuvent également être utilisé(s) en coupage dans les compositions conformes à l'invention avec tout autre élastomère diénique conventionnel et notamment avec tout autre élastomère classiquement utilisé dans les bandes de roulement de pneumatiques. A titre non limitatif de tels élastomères conventionnels, on peut citer le caoutchouc naturel, les polymères diéniques non fonctionnalisés correspondant aux chaînes P de polymères fonctionnalisés répondant à la formule II ou ces mêmes polymères mais couplés ou branchés ou fonctionnalisés mais avec des agents de fonctionnalisation autres que des agents alcoxysilanes, tels que par exemple des dérivés de l'étain ou de la benzophénone tels que décrits par exemple dans les brevets US-B-3 393 182, US-B-3 956 232, US-B-4 026 865, US-B-4 550 142 et US-B-5 001 196.

Lorsque l'élastomère conventionnel utilisé en coupage est du caoutchouc naturel ou un ou plusieurs polymères diéniques non fonctionnalisés comme par exemple les polybutadiènes, les polyisoprènes, les copolymères butadiène-styrène ou butadiène-styrène-isoprène, cet élastomère peut être présent entre 1 à 70 parties en poids pour 100 parties de polymère diénique fonctionnalisé ou modifié alcoxysilane. Lorsque l'élastomère conventionnel utilisé en coupage est un polymère fonctionnalisé avec un agent de fonctionnalisation autre qu'un composé alcoxysilane répondant à la formule I, cet élastomère peut être présent à raison de 1 à 100 parties en poids pour 100 parties en poids de polymère fonctionnalisé ou modifié alcoxysilane.

Les compositions conformes à l'invention peuvent évidemment également contenir les autres constituants et additifs habituellement utilisés dans les mélanges de caoutchouc comme des plastifiants, pigments, antioxydants, du soufre, des accélérateurs de vulcanisation, des huiles d'extension, un ou des agents de couplage ou de liaison de silice et/ou un ou des agents de recouvrement de la silice tels que des polyols, amines, alcoxysilanes, etc...

La présente invention a également pour objet un nouveau procédé de préparation de compositions de caoutchoucs diéniques comprenant à titre de charge renforçante du noir de carbone ou un mélange de noir de carbone et de silice, caractérisé en ce qu'on incorpore par un travail thermo-mécanique à un élastomère comprenant au moins un polymère diénique fonctionnalisé ou modifié par un dérivé alcoxysilane au moins un composé organosilane comportant une fonction amine ou imine répondant à la formule générale I.

L'incorporation de l'organosilane de formule générale I est effectuée dans tout dispositif approprié, par exemple dans un mélangeur interne ou une boudineuse de manière connue en soi.

Selon une première voie, on soumet l'élastomère ou le coupage comprenant au moins un polymère diénique fonctionnalisé ou modifié alcoxysilane à une première phase de travail thermo-mécanique après quoi on ajoute l'organosilane de formule I à l'élastomère et l'on effectue le mélangeage des 2 constituants dans une seconde phase, puis l'on ajoute le noir de carbone et les autres constituants habituellement utilisés dans les compositions de caoutchoucs destinées à la fabrication de pneumatiques à l'exception du système de vulcanisation et l'on poursuit le travail thermo-mécanique pendant une durée appropriée.

Selon une seconde voie, ou soumet l'élastomère comprenant au moins un polymère diénique fonctionnalisé ou modifié par un dérivé alcoxysilane et l'organosilane de formule I à une première phase de travail thermo-mécanique puis l'on ajoute le noir de carbone et les autres constituants habituellement utilisés dans les compositions de caoutchoucs destinées à la fabrication de pneumatiques à l'exception du système de vulcanisation et l'on poursuit le travail thermo-mécanique pendant une durée appropriée.

Selon une troisième voie, ou soumet l'élastomère comprenant au moins un polymère diénique fonctionnalisé ou modifié par un dérivé alcoxysilane, l'organosilane de formule I et le noir de carbone à une première phase de travail thermo-mécanique puis l'on ajoute les autres constituants habituellement utilisés dans les compositions de caoutchoucs destinées à la fabrication de pneumatiques à l'exception du système de vulcanisation et l'on poursuit le travail thermo-mécanique pendant une durée appropriée.

Dans le cas où c'est à la fois du noir de carbone et de la silice qui sont utilisés comme charge renforçante, on procède à un travail thermo-mécanique successivement de l'élastomère fonctionnalisé ou modifié, de l'agent organosilane de formule I, de la silice, de l'agent de liaison, après quoi l'on incorpore le noir de carbone. Le travail thermo-mécanique est dans ce cas préférentiellement effectué en 2 étapes thermiques séparées par une étape de refroidissement à une température inférieure à 100°C comme décrit dans la demande de brevet EP-A-0 501 227.

Au mélange obtenu selon l'un quelconque des modes d'exécution, on ajoute enfin le système de vulcanisation comme connu en soi dans une étape de finition avant de procéder à la vulcanisation de la composition.

L'invention est illustrée à titre non limitatif par les exemples qui ne sauraient constituer une limitation de la portée de l'invention.

Dans les exemples, les propriétés des compositions sont évaluées comme suit :
- Dureté Shore A : mesures effectuées selon la norme DIN 53505.
- Viscosité Mooney : ML (1+4) à 100°C mesurée selon la norme ASTM:D-1646.
- Modules d'allongement à 300 % (MA 300), 100 % (MA100) et 10 % (MA 10) : mesures effectuées selon la norme ISO 37.
- Indices de cassage Scott : mesurés à 20°C,
   Force rupture (FR) en MPa.
   Allongement à la rupture (AR) en %.
- Pertes hystérétiques (PH) : mesurées par rebond à 60°C en %.
- Propriétés dynamiques en cisaillement :
   Mesures en fonction de la déformation : effectuées à 10 Hertz avec une déformation crête-crête allant de 0,15 % à 50 %. La non linéarité exprimée en MPa est la différence de module de cisaillement entre 0.15 % et 50 % de déformation. L'hystérèse est exprimée par la mesure de tgδ à 7 % de déformation et à 23°C selon la norme ASTM D2231-71 (réapprouvée en 1977).

### Exemple 1

Cet exemple de contrôle a pour but de comparer les propriétés de 2 compositions à base de polymères fonctionnalisés avec 2 alcoxysilanes différents à 2 compositions à base des mêmes polymères mais l'un non fonctionnalisé et l'autre fonctionnalisé avec un agent de fonctionnalisation connu dans l'état de la technique comme procurant des propriétés hystérétiques intéressantes dans le cadre de compositions renforcées au noir de carbone.

Dans tous les essais de cet exemple, le polymère diénique est un copolymère de butadiène-styrène ayant une teneur en styrène incorporé de 26 % et une teneur de 41 % de liaisons-1,2 pour la partie butadiénique.

Pour l'essai A, le copolymère butadiène-styrène (SBRA) mis en oeuvre dans la composition est un copolymère fonctionnalisé avec le propyltriméthoxysilane (PTSI).

Pour l'essai B , le copolymère butadiène-styrène (SBRB) mis en oeuvre dans la composition est un copolymère fonctionnalisé avec le glycidyloxypropyltriméthoxysilane (GPTSI) vendu par la société Hüls sous la dénomination commerciale DYNASYLAN GLYMO et préparé selon le procédé décrit dans la demande de brevet FR 94/08887.

Pour l'essai C, le copolymère butadiène-styrène (SBRC) mis en oeuvre dans la composition est un copolymère fonctionnalisé avec le n-Bu₃SnCl comme décrit dans les brevets US-B-3 956 232 et 4 026 865.

Pour l'essai D, le copolymère (SBRD) mis en oeuvre dans la composition est un copolymère non fonctionnalisé stoppé en fin de copolymérisation à l'aide de méthanol.

Pour tous les essais, le copolymère est préparé dans un réacteur de 32 litres de capacité utile avec agitateur du type turbine, dans lequel on introduit en continu du toluène, du butadiène, du styrène et du THF dans un rapport massique 100 : 10 : 4,3 : 0,3 et une solution de 1030 micromoles de n-BuLi actif pour cent grammes de monomères. Les débits des différentes solutions sont calculés pour avoir un temps moyen de séjour de 45 minutes sous forte agitation. La température est maintenue constante à 60°C. En sortie de réacteur la conversion mesurée est de 88 %. Le copolymère est ensuite soit stoppé au méthanol, soit fonctionnalisé au cours d'une étape ultérieure.

Les copolymères utilisés dans les compositions A et B sont fonctionnalisés comme décrit ci-après.

En sortie du réacteur l'agent de fonctionnalisation est ajouté au polymère à l'entrée, soit d'un mélangeur statique conventionnel comportant 26 éléments et un volume de 250 ml lorsqu'il s'agit du PTSI, soit à l'entrée d'un mélangeur dynamique de 250 ml muni d'un agitateur réglé à une vitesse de rotation de 3100 tours par minute lorsqu'il s'agit du GPTSI. Le PTSI et le GPTSI sont ajoutés en une quantité telle que le rapport molaire agent de fonctionnalisation sur nombre de sites actifs de l'initiateur soit égal à 1,5 dans le cas du PTSI et égal à 2,0 dans le cas du GPTSI. La réaction de fonctionnalisation est effectuée à 60°C. Trois minutes après l'addition de l'agent de fonctionnalisation, on ajoute 0,5 partie pour cent parties d'élastomère de 4,4'-méthylène-bis-2,6-ditertiobutyl phénol en tant qu'agent antioxydant. Chacun des copolymères fonctionnalisés est récupéré par l'opération classique de stripping à la vapeur d'eau du solvant puis séché à l'étuve à 50°C.

A l'aide des 4 copolymères SBRA, B, C et D, on prépare comme connu en soi, 4 compositions de caoutchouc renforcées exclusivement par du noir de carbone selon la formulation suivante où toutes les parties sont exprimées en poids :

| | |
|---|---|
| Elastomère | 100 |
| Noir N 234 | 50 |
| Huile aromatique | 5 |
| Oxyde de zinc | 2,5 |
| Acide stéarique | 1,5 |
| Antioxydant (a) | 1,9 |
| paraffine (b) | 1,5 |
| Soufre | 1,4 |
| Sulfénamide (c) | 1,4 |

| | |
|---|---|
| (a) : antioxydant : N-(1,3-diméthyl-butyl)-N'-phényl-p-phénylènediamine | |
| (b) : paraffine : mélange de cires macro et microcristallines | |
| (c) : Sulfénamide : N-cyclohexyl-2-benzothiazyl sulfénamide | |

Les compositions sont réalisées en une seule étape pour aboutir à un mélange dans un mélangeur interne rempli à 70 %, dont la température de la cuve est de 60°C et la vitesse moyenne des palettes de 45 tours par minute.

On introduit l'élastomère dans la cuve puis après un temps approprié de malaxage tous les autres constituants de la formulation à l'exception du système de vulcanisation sont ajoutés et l'on poursuit le travail thermo-mécanique de malaxage jusqu'à la température de tombée de 180°C. On récupère le mélange puis l'on ajoute le soufre et la sulfénamide constituant le système de vulcanisation sur homo-finisseur à 30°C.

La vulcanisation est effectuée à 150°C pendant 40 minutes. On compare entre elles les propriétés des 4 compositions tant à l'état vulcanisé qu'à l'état non vulcanisé.

Les résultats sont consignés dans le tableau I :

**TABLEAU I**

| Compositions | SBRA | SBRB | SBRC | SBRD |
|---|---|---|---|---|
| Propriétés à l'état non vulcanisé | | | | |
| Mooney | 70 | 76 | 89 | 68 |

| Propriétés à l'état vulcanisé | | | | |
|---|---|---|---|---|
| Dureté Shore | 69.0 | 69.5 | 64.5 | 67.5 |
| MA10 | 6.0 | 6.0 | 4.7 | 5.8 |
| MA100 | 2.30 | 2.30 | 1.86 | 2.08 |
| MA300 | 2.90 | 2.95 | 2.75 | 2.57 |
| MA300/MA100 | 1.27 | 1.27 | 1.48 | 1.24 |

| Indices de cassage Scott à | | | | |
|---|---|---|---|---|
| 20°C FR | 24 | 24 | 25 | 23 |
| 20°C Ar % | 450 | 450 | 430 | 480 |
| PH à 60°C* | 35 | 34 | 29 | 37 |

| Propriétés dynamiques en fonction de la déformation | | | | |
|---|---|---|---|---|
| Δ G à 23°C | 2.30 | 2.30 | 0.95 | 2.50 |
| tgδ à 23°C | 0.25 | 0.25 | 0.19 | 0.27 |

| | | | | |
|---|---|---|---|---|
| (*) la déformation pour cette mesure de perte hystérétique est de 38 %. | | | | |

Au vu des propriétés à l'état cru et vulcanisé, on constate que les compositions A et B à base de polymères fonctionnalisés alcoxysilanes possèdent des propriétés légèrement améliorées par rapport à celles exhibées par la composition D mais bien inférieures à celles exhibées par la composition C, notamment en ce qui concerne les propriétés d'hystérèse à faible et forte déformations.

### Exemple 2

Cet exemple a pour but de mettre en évidence l'amélioration des propriétés des compositions conformes à l'invention.

On réalise avec les 4 copolymères utilisés dans l'exemple 1, 4 compositions qui diffèrent des précédentes uniquement par l'addition à l'élastomère d'un agent organosilane répondant à la formule générale I et qui en l'espèce est l'aminopropyltriméthoxysilane (APTSI) de formule : H₂N-(CH₂)₃-Si(OCH₃)₃.

Les compositions sont préparées selon la 1ère voie décrite auparavant. L'addition d'une partie en poids de l'organosilane pour 100 parties en poids d'élastomère est effectuée 20 secondes après le début de l'opération thermo-mécanique de malaxage.

Les propriétés des compositions obtenues sont consignées dans le tableau II.

**TABLEAU II**

| Compositions | SBRA | SBRB | SBRC | SBRD |
|---|---|---|---|---|
| Propriétés à l'état non vulcanisé | | | | |
| Mooney | 90 | 94 | 85 | 65 |

| Propriétés à l'état vulcanisé | | | | |
|---|---|---|---|---|
| Dureté Shore | 65.0 | 64.5 | 65 | 68.5 |
| MA10 | 5.00 | 5.00 | 4.90 | 6.00 |
| MA100 | 2.10 | 2.08 | 1.96 | 2.10 |
| MA300 | 2.90 | 2.95 | 2.76 | 2.50 |
| MA300/MA100 | 1.38 | 1.42 | 1.41 | 1.19 |

| Indices de cassage Scott à | | | | |
|---|---|---|---|---|
| 20°C FR | 25 | 26 | 25 | 22 |
| 20°C Ar % | 400 | 400 | 430 | 500 |
| PH 60°C* | 30 | 29 | 29 | 38 |

| Propriétés dynamiques en fonction de la déformation | | | | |
|---|---|---|---|---|
| Δ G à 23°C | 1.10 | 1.00 | 1.00 | 2.70 |
| tgδ à 23°C | 0.19 | 0.18 | 0.19 | 0.29 |

| | | | | |
|---|---|---|---|---|
| (*) la déformation pour cette mesure de perte hystérétique est de 38 %. | | | | |

Au vu des propriétés à l'état vulcanisé, on constate que l'addition au mélangeur interne d'aminopropyltriméthoxysilane confère aux compositions mettant en oeuvre les SBR A et B fonctionnalisés alcoxysilane des propriétés de renforcement améliorées et des propriétés d'hystérèse fortement améliorées par rapport à celles de la composition D mettant en oeuvre le SBRD stoppé au méthanol et du même niveau que celles obtenues avec la composition C mettant en oeuvre le SBRC fonctionnalisé n-Bu₃SnCl.

On constate également que si l'addition d'aminopropyltriméthoxysilane améliore fortement les propriétés des compositions SBRA et B, elle n'a pas d'effet sinon négatif sur les propriétés des compositions SBRC et D dans ce type de mélange à base de noir de carbone.

### Exemple 3

Cet exemple a pour but de montrer que l'amélioration des propriétés est également obtenue lorsque la charge renforçante n'est pas exclusivement constituée par du noir de carbone mais est constituée par un coupage de noir de carbone et de silice. On prépare avec les 4 polymères utilisés dans l'exemple 1, 4 compositions dont la formulation est la suivante :

| | |
|---|---|
| Elastomère | 100 |
| APTSI | 1 |
| Silice (*) | 30 |
| Noir N234 | 30 |
| Huile aromatique | 15 |
| Agent de liaison(**) | 2,4 |
| Oxyde de zinc | 2,5 |
| Acide stéarique | 1,5 |
| Antioxydant (a) | 1,9 |
| Paraffine (b) | 1,5 |
| Soufre | 1,1 |
| Sulfénamide (c) | 2 |
| Diphénylguanidine | 1,5 |

| | |
|---|---|
| (*) la silice est une silice hautement dispersible, sous forme de microperles, commercialisée par la Société Rhône Poulenc sous la dénomination commerciale Zeosil 1165 MP. | |
| (**) organosilane polysulfuré commercialisé par la Société Degussa sous la dénomination SI69. | |
| (a) : antioxydant : N-(1,3-diméthyl-butyl)-N'-phényl-p-phénylènediamine | |
| (b) : paraffine : mélange de cires macro et microcristallines | |
| (c) : Sulfénamide : N-cyclohexyl-2-benzothiazyl sulfénamide | |

L'obtention des compositions est effectuée, selon une forme d'exécution préférentielle, en 2 étapes thermo-mécaniques séparées par une phase de refroidissement. La 1ère étape est effectuée dans un mélangeur interne avec les mêmes conditions de coefficient de remplissage, de température et de vitesse des palettes que celles indiquées à l'exemple 1. L'organosilane, en l'occurrence l'APTSI, est comme dans l'exemple précédent rajouté à l'élastomère 20 secondes après le début du malaxage de l'élastomère puis une minute après l'addition de l'APTSI la silice, l'agent de liaison et l'huile sont rajoutés, ensuite une minute plus tard le noir de carbone puis l'acide stéarique et la paraffine. Le travail thermo-mécanique est poursuivi jusqu'à atteindre une température de tombée voisine de 160°C puis le bloc élastomérique est récupéré et refroidi.

La seconde étape est toujours effectuée dans le même mélangeur interne avec les conditions de température et de vitesse des palettes inchangées. Le bloc élastomérique est soumis à un travail thermo-mécanique pendant une durée appropriée pour amener la température à environ 100°C, on ajoute alors l'oxyde de zinc et l'antioxydant, après quoi on poursuit le travail thermo-mécanique jusqu'à atteindre une température de tombée voisine de 160°C et on récupère le mélange.

A ce mélange sont incorporés comme connu en soi les 3 composants constituant le système de vulcanisation au cours d'une étape de finition.

La vulcanisation est effectuée comme dans les autres exemples pendant 40 minutes à 150°C.

Les propriétés des 4 compositions sont consignées dans le tableau III et les 3 premières sont comparées à 3 compositions témoins (SBRA/T, SBRB/T et SBRC/T) mettant en oeuvre les mêmes copolymères mais dépourvues d'APTSI.

**TABLEAU III**

| Compositions | SBRA | SBRB | SBRC | SBRD | SBRA/T | SBRB/T | SBRC/T |
|---|---|---|---|---|---|---|---|
| Propriétés à l'état non vulcanisé | | | | | | | |
| Mooney | 85 | 85 | 70 | 60 | 82 | 82 | 68 |
| Dureté | 64.0 | 64.5 | 66 | 68.5 | 65 | 65 | 66 |
| Shore A | | | | | | | |
| MA10 | 4.8 | 4.8 | 5.3 | 6.0 | 5.0 | 5.0 | 5.5. |
| MA100 | 1.70 | 1.70 | 1.60 | 1.60 | 1.65 | 1.65 | 1.55 |
| MA300 | 2.10 | 2.15 | 1.85 | 1.80 | 2.00 | 2.03 | 1.80 |
| MA300/ | 1.24 | 1.26 | 1.16 | 1.13 | 1.21 | 1.23 | 1.16 |
| MA100 | | | | | | | |

| Indices de cassage Scott à 20°C : | | | | | | | |
|---|---|---|---|---|---|---|---|
| FR | 23 | 23 | 22 | 21 | 22 | 22 | 21 |
| AR% | 550 | 550 | 500 | 500 | 500 | 550 | 500 |
| PH à 60°C* | 23 | 22 | 29 | 33 | 25 | 24 | 30 |

| Propriétés dynamiques en fonction de la déformation | | | | | | | |
|---|---|---|---|---|---|---|---|
| ΔG à 23°C | 1.80 | 1.60 | 3.00 | 4.00 | 2.30 | 2.00 | 3.00 |
| tgδ à 23°C | 0.18 | 0.17 | 0.24 | 0.27 | 0.21 | 0.19 | 0.24 |

| | | | | | | | |
|---|---|---|---|---|---|---|---|
| (*) la déformation pour cette mesure de perte hystérétique est de 35 %. | | | | | | | |

Au vu des propriétés à l'état vulcanisé, on constate que l'addition au mélangeur interne d'aminopropyltriméthoxysilane confère aux compositions mettant en oeuvre les SBR A et B fonctionnalisés alcoxysilane des propriétés d'hystérèse fortement améliorées non seulement par rapport à celles de la composition D mettant en oeuvre le SBRD stoppé méthanol mais même par rapport à celles de la composition C mettant en oeuvre le SBRC fonctionnalisé par du n-Bu₃SnCl.

On constate également que si l'addition d'aminopropyltriméthoxysilane améliore significativement les propriétés des compositions SBR A et B, elle n'a pas d'effet sur les propriétés de la composition SBRC dans ce type de mélange noir-silice.

Ainsi l'addition d'agent organosilane répondant à la formule générale I, procure une amélioration des propriétés hystérétiques lorsque le noir de carbone n'est pas la charge unique.

### Exemple 4

Cet exemple montre à travers 4 essais relatifs à des compositions mettant en oeuvre 4 agents organosilanes différents, que l'ensemble des agents organosilanes répondant à la formule générale I procurent des compositions aux propriétés améliorées lorsqu'on les compare à celles exhibées par la composition SBRD de l'exemple 1.

Dans cet exemple, on reproduit à l'identique l'exemple 2 avec le SBRB hormis l'agent organosilane qui est le méthylaminopropyltriméthoxysilane (MAPTSI) de formule CH₃-HN-(CH₂)₃-Si(OCH₃)₃ dans l'essai 1, le diméthylaminopropyltriméthoxysilane (DMAPTSI) de formule : (CH3)₂-N-(CH₂)₃-Si(OCH₃)₃ dans l'essai 2, l'imidazolinepropyltriméthoxysilane (IMPTSI) de formule : 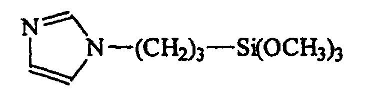 dans l'essai 3 et l'APTSI dans l'essai 4. Les propriétés des 4 compositions sont consignées dans le tableau IV.

**TABLEAU IV**

| Essais | 1 | 2 | 3 | 4 |
|---|---|---|---|---|
| Agent | MAPTSI | DMAPTSI | IMPTSI | APTSI |
| Propriétés à l'état non vulcanisé | | | | |
| Mooney | 104 | 98 | 88 | 94 |

| Propriétés à l'état vulcanisé | | | | |
|---|---|---|---|---|
| Dureté Shore | 66.8. | 66.5 | 66.6 | 64.5 |
| MA10 | 5.19 | 5.21 | 5.17 | 5.00 |
| MA100 | 2.31 | 2.15 | 2.18 | 2.08 |
| MA300 | 3.46 | 3.16 | 3.09 | 2.95 |
| MA300/MA100 | 1.50 | 1.47 | 1.42 | 1.42 |
| PH à 60°C* | 26.5 | 27.4 | 30 | 29 |

| Propriétés dynamiques en fonction de la déformation | | | | |
|---|---|---|---|---|
| Δ G à 23°C | 0.90 | 0.80 | 1.20 | 1.00 |
| tgδ à 23°C | 0.175 | 0.169 | 0.189 | 0.180 |

| | | | | |
|---|---|---|---|---|
| (*) la déformation pour cette mesure de perte hystérétique est de 38 %. | | | | |

Les résultats montrent que les divers agents organosilanes confèrent aux compositions des propriétés d'hystérèse fortement améliorées par rapport à celles exhibées par la composition SBRD de l'exemple 1 et de même niveau que celles exhibées par la composition SBRC de l'exemple 1. Les propriétés de renforcement des 4 compositions conformes à l'invention sont également améliorées.

En raison de leurs propriétés hystérétiques améliorées, les compositions conformes à l'invention lorsqu'elles sont mises en oeuvre dans un pneumatique sous forme de produits semi-finis, notamment sous forme de bandes de roulement, permettent l'obtention de pneumatiques ayant une résistance au roulement améliorée et par voie de conséquence permettent de réduire la consommation de carburant.

## Revendications

1. Composition de caoutchouc, vulcanisable au soufre, comprenant au moins un polymère diénique fonctionnalisé ou modifié et du noir de carbone à titre de charge renforçante, **caractérisée en ce que** le polymère diénique fonctionnalisé ou modifié est un polymère fonctionnalisé ou modifié par un dérivé de type alcoxy-silane et **en ce qu'**elle comprend en outre au moins un composé organosilane comportant une fonction amine ou imine répondant à la formule générale I :
Z-R¹-Si(OR²)₃₋ₙ(R³)ₙ
dans laquelle :
Z représente une fonction amine primaire, secondaire, cyclique ou non ou une fonction imine ou un reste polyaminé,
R¹ représente un reste alcoylène, arylène, alcoyarylène, aralcoylène, R² et R³, identiques ou différents, représentent un reste alcoyle, aryle, alkaryle ou aralkyle, chacun des restes R¹, R² et R³ ayant de 1 à 12 atomes de carbone et de préférence ayant de 1 à 4 atomes de carbone,
n est un nombre entier choisi parmi les valeurs 0, 1 ou 2.

2. Composition selon la revendication 1 **caractérisée en ce que** le reste R² du composé répondant à la formule générale I est un radical alcoyle inférieur ayant de 1 à 4 atomes de carbone.

3. Composition selon l'une quelconque des revendications 1 ou 2, **caractérisée en ce que** le polymère diénique fonctionnalisé alcoxysilane répond à la formule générale II :
(Y)-R⁵-Si(OR⁴)₂-P
dans laquelle :
Y représente un halogène ou un reste alcoyle, époxy, glycidyloxy, vinylique, allylique.
R⁵ représente un reste alcoylène, arylène, alcoyarylène, ou aralcoylène, R⁴ représente un reste alcoyle, aryle, alkylaryle ou aralkyle, chacun des restes R⁴ et R⁵ ayant de 1 à 12 atomes de carbone, et P représente la chaîne d'un polymère diénique choisi dans le groupe représenté par tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinyle aromatique ayant de 8 à 20 atomes de carbone.

4. Composition selon la revendication 3, **caractérisée en ce que** le polymère diénique fonctionnalisé alcoxysilane est fonctionnalisé par le 3-glycidyloxypropyltriméthoxysilane ou le 2-(3,4(époxycyclohexyl)-éthyltriméthoxysilane.

5. Composition selon l'une quelconque des revendications 1 à 4, **caractérisée en ce que** le polymère diénique est un copolymère de butadiène-styrène ou un copolymère de butadiène-styrène-isoprène.

6. Composition selon l'une quelconque des revendications 1 à 5, **caractérisée en ce que** le noir de carbone représente la totalité de la charge renforçante.

7. Composition selon l'une quelconque des revendications 1 à 5, **caractérisée en ce que** la charge renforçante est constituée par un mélange de noir de carbone et de silice, cette dernière pouvant représenter jusqu'à 70 % en poids de la charge totale.

8. Composition selon la revendication 7, **caractérisée en ce que** la silice est une silice précipitée hautement dispersible ayant une surface CTAB ≤ à 450 m²/g.

9. Composition selon la revendication 8, **caractérisée en ce que** la silice possède une surface spécifique BET ≥ à 100 et ≤ à 300 m²/g et un rapport surface spécifique BET/surface spécifique CTAB ≥ à 1 et < à 1,2.

10. Procédé de préparation d'une composition de caoutchouc à base d'élastomère diénique, vulcanisable au soufre, possédant des propriétés hystérétiques améliorées, **caractérisé en ce qu'**on incorpore par travail thermo-mécanique à un élastomère diénique fonctionnalisé ou modifié par un dérivé alcoxysilane avant addition et incorporation de tous les autres constituants, y compris la charge renforçante, habituellement utilisés dans des compositions de caoutchoucs diéniques vulcanisables au soufre, au moins un agent organosilane répondant à la formule générale I :
Z-R¹-Si(OR²)₃₋ₙ(R³)ₙ
dans laquelle :
Z représente une fonction amine primaire, secondaire cyclique ou non ou une fonction imine ou un reste polyaminé,
R¹, R² et R³, identiques ou différents représentent un reste alcoyle, aryle, alkaryle ou aralkyle ayant de 1 à 12 atomes de carbone et de préférence ayant de 1 à 4 atomes de carbone,
n est un nombre entier choisi parmi les valeurs 0, 1 ou 2.

11. Procédé selon la revendication 10, **caractérisé en ce que** l'agent organosilane est mis en présence de l'élastomère diénique fonctionnalisé avant tout travail thermo-mécanique et qu'on procède ensuite à l'incorporation de l'agent organosilane à l'élastomère par travail thermo-mécanique.

12. Procédé selon la revendication 10, **caractérisé en ce qu'**on ajoute l'agent organosilane à l'élastomère diénique fonctionnalisé ou modifié alcoxysilane après une phase initiale de travail thermo-mécanique de l'élastomère diénique fonctionnalisé ou modifié et **en ce qu'**on incorpore l'agent organosilane à l'élastomère diénique par travail thermo-mécanique.

13. Procédé selon la revendication 10, **caractérisé en ce que** l'on soumet l'élastomère comprenant au moins un polymère diénique fonctionnalisé ou modifié par un dérivé alcoxysilane, l'organosilane de formule I et le noir de carbone à une première phase de travail thermo-mécanique puis l'on ajoute les autres constituants habituellement utilisés dans les compositions de caoutchoucs destinées à la fabrication de pneumatiques à l'exception du système de vulcanisation et l'on poursuit le travail thermo-mécanique pendant une durée appropriée.

14. Procédé selon la revendication 12, **caractérisé en ce que** lorsque la charge renforçante est constituée par du noir de carbone et de la silice, on ajoute successivement à l'élastomère ayant subi une phase initiale de travail thermo-mécanique, dans l'ordre suivant l'agent organosilane de formule I puis la silice et l'agent de liaison, puis l'huile et enfin le noir de carbone avec l'acide stéarique et l'agent anti-oxydant, on récupère ensuite le bloc élastomérique formé qui est refroidi, que dans une seconde étape thermo-mécanique on ajoute au bloc élastomérique de la 1re étape les autres ingrédients habituellement utilisés dans de telles compositions de caoutchouc vulcanisables au soufre à l'exception du système de vulcanisation, qu'on les incorpore par travail thermo-mécanique, qu'on récupère le mélange et que dans une étape de finition on incorpore le système de vulcanisation et récupère la composition vulcanisable.

15. Pneumatique possédant une résistance au roulement améliorée, **caractérisé en ce qu'**il comprend une composition de caoutchouc vulcanisable au soufre comprenant au moins un polymère diénique fonctionnalisé ou modifié et du noir de carbone ou un mélange de noir de carbone et de silice à titre de charge renforçante, **caractérisé en ce que** le polymère diénique fonctionnalisé ou modifié est un polymère fonctionnalisé ou modifié par un dérivé alcoxysilane et **en ce qu'**elle comprend en outre au moins un composé organosilane comportant une fonction amine ou imine répondant à la formule générale I :
Z-R¹-Si(OR²)₃₋ₙ(R³)ₙ
dans laquelle :
Z représente une fonction amine primaire, secondaire cyclique ou non ou une fonction imine ou un reste polyaminé,
R¹, R² et R³, identiques ou différents représentent un reste alcoyle, aryle, alkaryle ou aralkyle ayant de 1 à 12 atomes de carbone et de préférence ayant de 1 à 4 atomes de carbone,
n est un nombre entier choisi parmi les valeurs 0, 1 ou 2.

16. Pneumatique selon la revendication 15, **caractérisé en ce que** la composition de caoutchouc entre dans la constitution de la bande de roulement.

17. Bande de roulement de pneumatique comprenant une composition de caoutchouc vulcanisable au soufre comprenant au moins un polymère diénique fonctionnalisé ou modifié et du noir de carbone ou un mélange de noir de carbone et de silice à titre de charge renforçante, **caractérisée en ce que** le polymère diénique fonctionnalisé ou modifié est un polymère fonctionnalisé ou modifié par un dérivé alcoxysilane et **en ce qu'**elle comprend en outre au moins un composé organosilane comportant une fonction amine ou imine répondant à la formule générale I :
Z-R¹-Si(OR²)₃₋ₙ(R³)ₙ
dans laquelle :
Z représente une fonction amine primaire, secondaire cyclique ou non ou une fonction imine ou un reste polyaminé.
R¹, R² et R³, identiques ou différents, représentent un reste alcoyle, aryle, alkaryle ou aralkyle ayant de 1 à 12 atomes de carbone et de préférence ayant de 1 à 4 atomes de carbone,
n est un nombre entier choisi parmi les valeurs 0, 1 ou 2.

## Patentansprüche

1. Mit Schwefel vulkanisierbare Kautschukmischung, die mindestens ein funktionalisiertes oder modifiziertes Dienpolymer und Ruß als verstärkenden Füllstoff enthält, **dadurch gekennzeichnet, daß** das funktionalisierte oder modifizierte Dienpolymer ein Polymer ist, das mit einem Derivat vom Typ Alkoxy-Silan funktionalisiert oder modifiziert ist, und dadurch, daß sie mindestens ein Organosilan enthält, das eine Amino- oder Iminogruppe aufweist und der allgemeinen Formel I entspricht:
Z-R¹-Si(OR²)₃₋ₙ(R³)ₙ,
worin bedeuten:
Z eine primäre, sekundäre, cyclische oder nicht cyclische Aminogruppe oder eine Iminogruppe oder eine mehrfach aminierte Gruppe,
R¹ Alkylen, Arylen, Alkylarylen, Aralkylen, und R² und R³, die identisch oder voneinander verschieden sind, Alkyl, Aryl, Alkaryl oder Aralkyl, wobei die Gruppen R¹, R² und R³ jeweils 1 bis 12 Kohlenstoffatome und vorzugsweise 1 bis 4 Kohlenstoffatome aufweisen,
n 0 oder eine ganze Zahl, die unter 1 oder 2 ausgewählt ist.

2. Zusammensetzung nach Anspruch 1, **dadurch gekennzeichnet, daß** die Gruppe R² der Verbindung der allgemeinen Formel I eine niedere Alkylgruppe mit 1 bis 4 Kohlenstoffatomen ist.

3. Zusammensetzung nach einem der Ansprüche 1 oder 2, **dadurch gekennzeichnet, daß** das mit Alkoxysilan funktionalisierte Dienpolymer der allgemeinen Formel II entspricht:
(Y)-R⁵-Si(OR⁴)₂-P,
worin bedeuten:
Y Halogen oder Alkyl, Epoxy, Glycidyloxy, Vinyl, Allyl;
R⁵ Alkylen, Arylen, Alkylarylen oder Aralkylen, R⁴ Alkyl, Aryl, Alkylaryl oder Aralkyl, wobei die Gruppen R⁴ und R⁵ jeweils 1 bis 12 Kohlenstoffatome aufweisen, und P die Kette eines Dienpolymers, das unter beliebigen Homopolymeren, die durch Polymerisation eines konjugierten Dienmonomers mit 4 bis 12 Kohlenstoffatomen erhalten werden, oder beliebigen Copolymeren ausgewählt ist, die bei der Copolymerisation eines oder mehrere konjugierter Diene miteinander oder mit einer oder mehreren vinylaromatischen Verbindungen mit 8 bis 20 Kohlenstoffatomen anfallen.

4. Zusammensetzung nach Anspruch 3, **dadurch gekennzeichnet, daß** das mit Alkoxysilan funktionalisierte Dienpolymer mit 3-Glycidyloxypropyltrimethoxysilan oder 2-(3,4-Epoxycyclohexyl)-ethyltrimethoxysilan funktionalisiert wurde.

5. Zusammensetzung nach einem der Ansprüche 1 bis 4, **dadurch gekennzeichnet, daß** das Dienpolymer ein Butadien-Styrol-Copolymer oder ein Butadien-Styrol-Isopren-Copolymer ist.

6. Zusammensetzung nach einem der Ansprüche 1 bis 5, **dadurch gekennzeichnet, daß** der Ruß den gesamten verstärkenden Füllstoff ausmacht.

7. Zusammensetzung nach einem der Ansprüche 1 bis 5, **dadurch gekennzeichnet, daß** der verstärkende Füllstoff aus einem Gemisch von Ruß und Kieselsäure besteht, wobei letztere bis zu 70 Gew.-% des gesamten Füllstoffs ausmachen kann.

8. Zusammensetzung nach Anspruch 7, **dadurch gekennzeichnet, daß** die Kieselsäure ein hochdispergierbare Kieselsäure mit einer CTAB-Oberfläche ≤450 m²/g ist.

9. Zusammensetzung nach Anspruch 8, **dadurch gekennzeichnet, daß** die Kieselsäure eine spezifische BET-Oberfläche ≥100 und ≤300 m²/g und ein Verhältnis spezifische BET-Oberfläche/spezifische CTAB-Oberfläche ≥1 und ≤1,2 aufweist.

10. Verfahren zur Herstellung einer Kautschukmischung auf der Basis eines mit Schwefel vulkanisierbaren Dienelastomers, die verbesserte Hystereseeigenschaften aufweist, **dadurch gekennzeichnet, daß** in ein mit einem Alkoxysilan funktionalisiertes oder modifiziertes Dienelastomer vor der Zugabe und dem Einarbeiten aller anderen Bestandteile, die üblicherweise in mit Schwefel vulkanisierbaren Dienkautschukmischungen verwendet werden, einschließlich des verstärkenden Füllstoffs, mindestens ein Organosilan der allgemeinen Formel I eingearbeitet wird:
Z-R¹-Si(OR²)₃₋ₙ(R³)ₙ,
worin bedeuten:
Z eine primäre, sekundäre, cyclische oder nicht cyclische Aminogruppe oder eine Iminogruppe oder eine mehrfach aminierte Gruppe,
R¹, R² und R³, die identisch oder voneinander verschieden sind, Alkyl, Aryl, Alkaryl oder Aralkyl mit 1 bis 12 Kohlenstoffatomen und vorzugsweise 1 bis 4 Kohlenstoffatomen,
n 0 oder eine ganze Zahl, die unter 1 oder 2 ausgewählt ist.

11. Verfahren nach Anspruch 10, **dadurch gekennzeichnet, daß** das Organosilan mit dem funktionalisierten Dienelastomer vor der thermomechanischen Bearbeitung in Kontakt gebracht wird und das Organosilan dann durch thermomechanische Bearbeitung in das Elastomer eingearbeitet wird.

12. Verfahren nach Anspruch 10, **dadurch gekennzeichnet, daß** das Organosilan nach einer anfänglichen thermomechanischen Bearbeitung des funktionalisierten oder modifizierten Dienelastomers zu dem mit Alkoxysilan modifizierten oder funktionalisierten Dienelastomer gegeben wird und dadurch, daß das Organosilan durch thermomechanische Bearbeitung in das Dienelastomer eingearbeitet wird.

13. Verfahren nach Anspruch 10, **dadurch gekennzeichnet, daß** das Elastomer, das mindestens ein mit einem Alkoxysilan funktionalisiertes oder modifiziertes Dienpolymer enthält, das Organosilan der Formel I und die Ruß in einer ersten Phase thermomechanisch bearbeitet werden, dann die anderen Bestandteile, die üblicherweise in Dienkautschukmischungen, die zur Herstellung von Luftreifen vorgesehen sind, verwendet werden, mit Ausnahme des Vulkanisationssystems zugegeben werden und schließlich die thermomechanische Bearbeitung während einer geeignet gewählten Zeitspanne fortgesetzt wird.

14. Verfahren nach Anspruch 12, **dadurch gekennzeichnet, daß**, wenn der verstärkende Füllstoff aus Ruß und Kieselsäure besteht, zu dem Elastomer, das zuvor in einer anfänglichen Phase thermomechanisch bearbeitet wurde, in der folgenden Reihenfolge gegeben werden: das Organosilan der Formel I, dann die Kieselsäure und das Bindemittel, dann das Öl und anschließend der Ruß mit der Stearinsäure und dem Antioxidationsmittel, wobei der gebildete Elastomerblock, der abgekühlt wird, gewonnen wird, und dadurch, daß in einem zweiten Schritt der thermomechanischen Bearbeitung zu dem Elastomerblock des ersten Schritts die anderen üblicherweise in mit Schwefel vulkanisierbaren Kautschukmischungen verwendeten Bestandteile mit Ausnahme des Vulkanisationssystems gegeben werden, die durch thermomechanische Bearbeitung eingearbeitet werden, wobei das Gemisch gewonnen wird, und dadurch, daß in einem abschließenden Schritt das Vulkanisationssystem zugegeben und die vulkanisierbare Zusammensetzung gewonnen wird.

15. Luftreifen mit verbessertem Rollwiderstand, **dadurch gekennzeichnet, daß** er eine mit Schwefel vulkanisierbare Kautschukmischung enthält, die mindestens ein funktionalisiertes oder modifiziertes Dienpolymer und Ruß oder ein Gemisch von Ruß und Kieselsäure als verstärkenden Füllstoff enthält, **dadurch gekennzeichnet, daß** das funktionalisierte oder modifizierte Dienpolymer ein Polymer ist, das mit einem Alkoxysilan funktionalisiert oder modifiziert wurde, und **dadurch gekennzeichnet, daß** sie außerdem mindestens ein Organosilan, das eine Aminogruppe oder Iminogruppe aufweist, der folgenden allgemeinen Formel I enthält:
Z-R¹-Si(OR²)₃₋ₙ(R³)ₙ,
worin bedeuten:
Z eine primäre, sekundäre, cyclische oder nicht cyclische Aminogruppe oder eine Iminogruppe oder eine mehrfach aminierte Gruppe,
R¹, R² und R³, die identisch oder voneinander verschieden sind, Alkyl, Aryl, Alkaryl oder Aralkyl mit 1 bis 12 Kohlenstoffatomen und vorzugsweise 1 bis 4 Kohlenstoffatomen,
n 0 oder eine ganze Zahl, die unter 1 oder 2 ausgewählt ist.

16. Luftreifen nach Anspruch 15, **dadurch gekennzeichnet, daß** die Kautschukmischung in dem Laufstreifen enthalten ist.

17. Laufstreifen für Luftreifen, der eine mit Schwefel vulkanisierbare Kautschukmischung enthält, die mindestens ein funktionalisiertes oder modifiziertes Dienpolymer und Ruß oder ein Gemisch von Ruß und Kieselsäure als verstärkenden Füllstoff enthält, **dadurch gekennzeichnet, daß** das funktionalisierte oder modifizierte Dienpolymer ein Polymer ist, das mit einem Alkoxysilan funktionalisiert oder modifiziert wurde, und **dadurch gekennzeichnet, daß** sie außerdem mindestens ein Organosilan, das eine Aminogruppe oder Iminogruppe aufweist, der folgenden allgemeinen Formel I enthält:
Z-R¹-Si(OR²)₃₋ₙ(R³)ₙ,
worin bedeuten:
Z eine primäre, sekundäre, cyclische oder nicht cyclische Aminogruppe oder eine Iminogruppe oder eine polyaminierte Gruppe,
R¹, R² und R³, die identisch oder voneinander verschieden sind, Alkyl, Aryl, Alkaryl oder Aralkyl mit 1 bis 12 Kohlenstoffatomen und vorzugsweise 1 bis 4 Kohlenstoffatomen,
n 0 oder eine ganze Zahl, die unter 1 oder 2 ausgewählt ist.

## Claims

1. A sulphur-vulcanisable rubber composition comprising at least one functionalised or modified diene polymer and carbon black as reinforcing filler, **characterised in that** the functionalised or modified diene polymer is a polymer functionalised or modified by a derivative of the alkoxysilane type, and **in that** it furthermore comprises at least one organosilane compound having an amine or imine function satisfying the general formula I:
Z-R¹-Si(OR²)₃₋ₙ(R³)ₙ
in which:
Z represents a primary amine function, a secondary amine function, whether cyclic or not, or an imine function or a polyamine radical;
R¹ represents an alkylene, arylene, alkarylene or aralkylene radical, R² and R³, which may be identical or different, represent an alkyl, aryl, alkaryl or aralkyl radical, each of the radicals R¹, R² and R³ having from 1 to 12 carbon atoms and preferably 1 to 4 carbon atoms.
n is a whole number selected from the values of 0, 1 and 2.

2. A composition according to claim 1, **characterised in that** the radical R² of the compound of general formula I is a lower alkyl radical having from 1 to 4 carbon atoms.

3. A composition according to any one of claims 1 or 2, **characterised in that** the alkoxysilane-functionalised diene polymer has the general formula II:
(Y)-R⁵-Si(OR⁴)₂-P
in which:
Y represents a halogen or an alkyl, epoxy, glycidyloxy, vinyl or allyl radical; R⁵ represents an alkylene, arylene, alkarylene or aralkylene radical, R⁴ represents an alkyl, aryl, alkylaryl or aralkyl radical, each of the radicals R⁴ and R⁵ having from 1 to 12 carbon atoms, and P represents the chain of a diene polymer selected from the group represented by any homopolymer obtained by polymerisation of a conjugated diene monomer having from 4 to 12 carbon atoms, any copolymer obtained by copolymerisation of one or more dienes conjugated with each other or with one or more aromatic vinyl compounds having from 8 to 20 carbon atoms.

4. A composition according to Claim 3, **characterised in that** the alkoxysilane-functionalised diene polymer is functionalised by 3-glycidyloxypropyltrimethoxysilane or 2-(3,4(epoxycyclohexyl)-ethyltrimethoxysilane.

5. A composition according to any one of claims 1 to 4, **characterised in that** the diene polymer is a butadiene-styrene copolymer or a butadiene-styrene-isoprene copolymer.

6. A composition according to any one of claims 1 to 5, **characterised in that** the carbon black represents all of the reinforcing filler.

7. A composition according to any one of claims 1 to 5, **characterised in that** the reinforcing filler is formed of a mixture of carbon black and silica, which latter may represent up to 70% by weight of the total filler.

8. A composition according to claim 7, **characterised in that** the silica is a highly dispersible precipitated silica having a CTAB surface area of ≤ 450 m²/g.

9. A composition according to claim 8, **characterised in that** the silica has a BET specific surface area ≥100 and ≤ 300 m²/g, and a ratio of BET specific surface area to CTAB specific surface area ≥1 and ≤ 1.2.

10. A method of preparing a sulphur-vulcanisable rubber composition having a base of diene elastomer which has improved hysteresis properties, **characterised in that** there is incorporated, by thermo-mechanical working, in a diene elastomer functionalised or modified by an alkoxysilane derivative before addition and incorporation of all the other components, including the reinforcing filler, which are customarily used in sulphur-vulcanisable diene rubber compositions, at least one organosilane agent of general formula I:
Z-R¹-Si(OR²)₃₋ₙ(R³)ₙ
in which:
Z represents a primary amine function, a secondary amine function, whether cyclic or not, or an imine function or a polyamine radical,
R¹, R², and R³, which are identical or different, represent an alkyl, aryl, alkaryl or aralkyl radical having from 1 to 12 carbon atoms and preferably having from 1 to 4 carbon atoms;
and n is a whole number selected from among the values of 0, 1 and 2.

11. A process according to claim 10, **characterised in that** the organosilane agent is placed in the presence of the functionalised diene elastomer before any thermo-mechanical work and that the organosilane agent is then incorporated in the elastomer by thermo-mechanical working.

12. A process according to claim 10, **characterised in that** the organosilane agent is added to the alkoxysilane-functionalised or modified diene elastomer after an initial phase of thermo-mechanical working of the functionalised or modified diene elastomer, and **in that** the organosilane agent is incorporated in the diene elastomer by thermo-mechanical working.

13. A process according to claim 10, **characterised in that** the elastomer comprising at least one diene polymer functionalised or modified by an alkoxysilane derivative, the organosilane of formula I, and the carbon black are subjected to a first phase of thermo-mechanical working, whereupon the other components customarily used in rubber compositions intend for the manufacture of tyres are added, with the exception of the vulcanisation system, and the thermo-mechanical working is continued for a suitable period of time.

14. A process according to claim 12, **characterised in that** when the reinforcing filler is formed of carbon black and silica, there are added in succession to the elastomer which has undergone an initial phase of thermo-mechanical working, in the following order, the organosilane agent of formula I, then the silica and the bonding agent, then the oil, and finally the carbon black with the stearic acid and the antioxidising agent, the elastomeric block formed is then recovered and cooled, and that in a second thermo-mechanical step the other ingredients customarily used in such sulphur-vulcanisable rubber compositions are added to the elastomeric block of the first step, with the exception of the vulcanisation system, that they are incorporated by thermo-mechanical working, that the mixture is recovered, and that, in a finishing step, the vulcanisation system is incorporated and the vulcanisable composition recovered.

15. A tyre having improved resistance to rolling, **characterised in that** it contains a sulphur-vulcanisable rubber composition comprising at least one functionalised or modified diene polymer and carbon black or a mixture of carbon black and silica as reinforcing filler, **characterised in that** the functionalised or modified diene polymer is a polymer functionalised or modified by an alkoxysilane derivative, and **in that** it furthermore comprises at least one organosilane compound comprising an amine or imine function having the general formula I:
Z-R¹-Si(OR²)₃₋ₙ(R³)ₙ
in which:
Z represents a primary amine function, a secondary amine function, whether cyclic or not, or an imine function or a polyamine radical;
R¹, R² and R³, which are identical or different, represent an alkyl, aryl, alkaryl or aralkyl radical having from 1 to 12 carbon atoms and preferably from 1 to 4 carbon atoms; and
n is a whole number selected from among the values of 0, 1 and 2.

16. A tyre according to claim 15, **characterised in that** the rubber composition enters into the constitution of the treads.

17. A tyre tread comprising a sulphur-vulcanisable rubber composition comprising at least one functionalised or modified diene polymer and carbon black or a mixture of carbon black and silica as reinforcing filler, **characterised in that** the functionalised or modified diene polymer is a polymer functionalised or modified by an alkoxysilane derivative, and **in that** it furthermore comprises at least one organosilane compound comprising an amine or imine function of the general formula I:
Z-R¹-Si(OR²)₃₋ₙ(R³)ₙ
in which:
Z represents a primary amine function, a secondary amine function, whether cyclic or not, or an imine function or a polyamine radical;
R¹, R² and R³, which are identical or different, represent an alkyl, aryl, alkaryl or aralkyl radical having from 1 to 12 carbon atoms and preferably having from 1 to 4 carbon atoms;
n is a whole number selected from among the values of 0, 1 and 2.
